# EUROPÄISCHE PATENTANMELDUNG

(11) **EP 1 245 835 A2**
(43) Veröffentlichungstag der Anmeldung: **02.10.2002**
(21) Anmeldenummer: 02006210.5
(22) Anmeldetag: 19.03.2002
(51) Int. Cl.: F16B 5/02, F16B 43/00

(54) **Bauteilpositionierung**

(30) Priorität: 28.03.2001 DE 10115247
(71) Anmelder: Delphi Technologies, Inc., Troy, MI 48007 (US)
(72) Erfinder: Fischer, Harald Walter, 42897 Remscheid (DE); Büngeler, Jörg, 42489 Wülfrath (DE); Geiermann, Volkmar Anton, 50827 Köln (DE)
(74) Vertreter: Manitz, Finsterwald & Partner GbR

(57) **Zusammenfassung**

Die Erfindung betrifft eine Montagevorrichtung zum Positionieren zumindest eines ersten Bauteils (11) insbesondere einer Kraftfahrzeuginnenausstattung an wenigstens einem zweiten Bauteil (13) insbesondere einer Fahrzeugkarosserie mit einem bei der Montage einstellbaren und im montierten Zustand fixierten Nominalabstand (D) zwischen den beiden Bauteilen (11,13), mit einem Distanzelement (15), das an dem zweiten Bauteil (13) in Abstandsrichtung insbesondere stufenlos verstellbar anbringbar ist, einem Befestigungselement (17), mit dem das erste Bauteil (11) am Distanzelement im durch die Stellung des am zweiten Bauteil (13) angebrachten Distanzelementes (15) vorgegebenen Nominalabstand (D) zum zweiten Bauteil fixierbar ist (13), und einem Halteelement (19), mit dem das Distanzelement (15) bei durch das Befestigungselement (17) fixiertem ersten Bauteil (11) in seiner den Nominalabstand (D) zwischen den beiden Bauteilen (11,13) festlegenden Stellung am zweiten Bauteil (13) feststellbar ist. Die Erfindung betrifft außerdem ein Positionierungsverfahren.

## Beschreibung

Die Erfindung betrifft eine Montagevorrichtung sowie ein Verfahren zum Positionieren zumindest eines ersten Bauteils insbesondere einer Kraftfahrzeuginnenausstattung an wenigstens einem zweiten Bauteil insbesondere einer Fahrzeugkarosserie.

Insbesondere bei der Cockpit- oder Armaturentafelmontage in Kraftfahrzeugen kommt es in der Praxis zu Positionierungsproblemen, die durch Toleranzen der Fahrzeugkarosserie verursacht werden. Hierdurch können bei der Cockpitmontage Spalten oder Lücken in einer nicht mehr akzeptierbaren Größenordnung von mehreren Millimetern entstehen. Die korrekte Positionierung von Cockpitkomponenten wie beispielsweise von Airbags, der Lenksäule oder von Knieschutzeinrichtungen wird hierdurch erschwert oder unmöglich gemacht.

Es ist das der Erfindung zugrundeliegende Problem (Aufgabe), eine Möglichkeit zu schaffen, Bauteile, wie sie insbesondere in Kraftfahrzeugen bei der Montage der Fahrzeuginnenausstattung verwendet werden, mit möglichst hoher Genauigkeit relativ zueinander zu positionieren, wobei dies mit möglichst geringem Kosten- und Montageaufwand möglich sein soll.

Die Lösung dieser Aufgabe erfolgt erfindungsgemäß zum einen durch die Merkmale des unabhängigen Vorrichtungsanspruchs und insbesondere dadurch, daß die Montagevorrichtung ein Distanzelement, das an dem zweiten Bauteil in Abstandsrichtung insbesondere stufenlos verstellbar anbringbar ist, ein Befestigungselement, mit dem das erste Bauteil am Distanzelement im durch die Stellung des am zweiten Bauteil angebrachten Distanzelementes vorgegebenen Nominalabstand zum zweiten Bauteil fixierbar ist, und ein Halteelement umfaßt, mit dem das Distanzelement bei durch das Befestigungselement fixiertem ersten Bauteil in seiner den Nominalabstand zwischen den beiden Bauteilen festlegenden Stellung am zweiten Bauteil feststellbar ist.

Die Erfindung ermöglicht die Positionierung des ersten Bauteils am zweiten Bauteil mit einem bei der Montage einstellbaren und im montierten Zustand fixierten Nominalabstand zwischen den beiden Bauteilen.

Erfindungsgemäß kann das Distanzelement am zweiten Bauteil angebracht und im angebrachten Zustand in Abstandsrichtung verstellt werden. Bevorzugt ist das Distanzelement mit dem zweiten Bauteil verschraubbar, so daß die Lage des Distanzelementes relativ zum zweiten Bauteil stufenlos durch Verschrauben verändert werden kann. Vorzugsweise ist hierfür eine am zweiten Bauteil ausgebildete oder befestigte Schraubaufnahme vorgesehen, in die das Distanzelement eingeschraubt werden kann.

Mit dem Befestigungselement kann das erste Bauteil am Distanzelement fixiert werden, und zwar insbesondere bereits in dem gewünschten Nominalabstand, der durch die zuvor eingestellte Position des am zweiten Bauteil angebrachten Distanzelementes vorgegeben sein kann.

Mit dem Halteelement kann das Distanzelement festgestellt werden, wodurch die relative Lage zwischen dem Distanzelement und dem zweiten Bauteil und damit der Nominalabstand zwischen den beiden Bauteilen fixiert wird. Das Halteelement dient als eine Sicherungseinrichtung, mit der die vom Distanzelement, dem ersten Bauteil und dem das erste Bauteil am Distanzelement fixierenden Befestigungselement gebildete Einheit in ihrer Position bezüglich des zweiten Bauteils gesichert wird. Der Nominalzustand, der durch Einstellen des Distanzelementes und durch Befestigen des ersten Bauteils am Distanzelement hergestellt wird und in dem sich die beiden Bauteile im gewünschten Nominalabstand voneinander befinden, kann durch das Halteelement gewissermaßen "eingefroren" werden.

Die Lösung der der Erfindung zugrundeliegenden Aufgabe erfolgt außerdem durch die Merkmale des unabhängigen Verfahrensanspruchs und insbesondere dadurch, daß am zweiten Bauteil ein Distanzelement angebracht und durch Verstellen in Abstandsrichtung relativ zum zweiten Bauteil in eine Nominalstellung gebracht wird, das erste Bauteil mit einem Befestigungselement am Distanzelement insbesondere in einem durch die Stellung des Distanzelementes vorgegebenen Nominalabstand zum zweiten Bauteil fixiert wird, und das Distanzelement mit einem Halteelement am zweiten Bauteil festgestellt wird.

Dabei kann zunächst das Distanzelement in die Nominalstellung gebracht und dann das erste Bauteil am Distanzelement im Nominalabstand zum zweiten Bauteil fixiert werden, woraufhin das Feststellen bzw. Sichern mittels des Halteelementes erfolgt. Alternativ ist es in Abhängigkeit von den baulichen Gegebenheiten erfindungsgemäß auch möglich, zunächst das erste Bauteil am Distanzelement mittels des Befestigungselementes zu fixieren oder zumindest lose oder unverlierbar anzubringen und anschließend die dadurch gebildete Einheit als Ganzes über das Distanzelement am zweiten Bauteil anzubringen und dann das Distanzelement zu verstellen, bis dessen gewünschte Nominalstellung zwischen den beiden Bauteilen erreicht ist, woraufhin das erste Bauteil endgültig am Distanzelement fixiert wird, sofern dies nicht bereits zuvor erfolgt ist.

Die Erfindung schafft eine sich durch besondere Einfachheit und sehr geringen Kosten- und Montageaufwand auszeichnende Montagemöglichkeit zur exakten Positionierung zumindest eines Bauteils an wenigstens einem weiteren Bauteil. Anstelle einzelner Bauteile können erfindungsgemäß auch ganze Baueinheiten oder Baugruppen in einem einstellbaren Nominalabstand voneinander positioniert und fixiert werden.

Mit der Erfindung können vorhandene Toleranzen schnell und einfach durch entsprechendes Einstellen des Nominalabstands kompensiert werden, wodurch ein hoher Verarbeitungsqualitätsgrad insbesondere bei der Montage von Fahrzeuginnenausstattungen erzielt wird. Die Zwischenräume zwischen benachbarten Komponenten z.B. eines Fahrzeugcockpits können mittels der Erfindung auf ein Minimum reduziert werden. Unabhängig von variierenden Gegebenheiten insbesondere der Fahrzeugkarosserie kann durch die erfindungsgemäße Einstellbarkeit stets die gleiche End- oder Nominalposition von zu montierenden Komponenten erreicht werden. Aufwendige Nacharbeiten sind aufgrund der Erfindung nicht erforderlich. Außerdem erhöht die erfindungsgemäße Möglichkeit, Toleranzen auszugleichen, die Fahrzeugsicherheit insbesondere dann, wenn Sicherheitseinrichtungen wie Airbags und andere Insassenrückhaltesysteme im Fahrzeug montiert werden.

Bevorzugt ist das erste Bauteil zwischen dem Distanzelement und dem Befestigungselement einklemmbar oder einspannbar. Dabei ist vorzugsweise vorgesehen, daß das Befestigungselement mit dem Distanzelement insbesondere unter Zwischenlage des ersten Bauteils verschraubbar ist. Das Befestigungselement kann in das Distanzelement einschraubbar sein.

In einer besonders bevorzugten praktischen Ausgestaltung der Erfindung ist vorgesehen, daß das Distanzelement, das Befestigungselement und das Halteelement jeweils in Form eines Schraubenelementes vorgesehen sind. Vorzugsweise können die Elemente dabei ineinander gesteckt und ineinander geschraubt werden.

Das Distanzelement weist bevorzugt einen zumindest bereichsweise mit einem Außengewinde versehenen Schaftabschnitt auf. Ferner ist bevorzugt vorgesehen, daß das Distanzelement eine wenigstens bereichsweise mit einem Innengewinde versehene Durchführung aufweist. Des weiteren ist es bevorzugt, wenn das Distanzelement eine Anlagefläche für das erste Bauteil aufweist, die an einem Kopfabschnitt ausgebildet ist, und die Anlagefläche und ein Schaftabschnitt des Distanzelementes in entgegengesetzte Richtungen weisen.

Vorzugsweise weist das Befestigungselement einen zumindest bereichsweise mit einem Außengewinde versehenen Schaftabschnitt auf. In dem Schaftabschnitt des Befestigungselementes ist bevorzugt eine Durchführung ausgebildet. Ferner ist vorzugsweise vorgesehen, daß das Befestigungselement eine Anlagefläche für das erste Bauteil aufweist, die an einem Kopfabschnitt ausgebildet ist und in die gleiche Richtung weist wie ein Schaftabschnitt des Befestigungselementes.

Das Halteelement weist vorzugsweise einen zumindest bereichsweise mit einem Außengewinde versehenen Schaftabschnitt auf.

Mit in dieser Weise ausgebildeten Schraubenelementen wird eine besonders einfach handhabbare und kostengünstig herstellbare Montagevorrichtung geschaffen, die eine einfache, zuverlässige und dauerhafte Positionierung zweier Bauteile in einem gewünschten, einstellbaren Nominalabstand ermöglicht und außerdem die Sicherung des eingestellten Nominalzustands gestattet.

Das Feststellen des Distanzelementes am zweiten Bauteil ist vorzugsweise dadurch realisiert, daß im montierten Zustand das Distanzelement durch das Halteelement gekontert ist. Vorzugsweise ist das Halteelement mit dem zweiten Bauteil verschraubbar.

In einer praktischen Ausgestaltung ist ferner vorgesehen, daß das Distanzelement und das Befestigungselement jeweils mit einer Durchführung für das Halteelement versehen sind.

Ferner wird vorgeschlagen, daß im montierten Zustand das Distanzelement, das Befestigungselement und das Halteelement koaxial angeordnet sind.

Gemäß einer weiteren Ausführungsform ist vorgesehen, daß im montierten Zustand das Halteelement durch die von dem Distanzelement, dem Befestigungselement und dem ersten Bauteil gebildete Einheit hindurch mit dem zweiten Bauteil in Eingriff steht.

Weitere bevorzugte Ausführungsformen sowohl der erfindungsgemäßen Montagevorrichtung als auch des erfindungsgemäßen Positionierungsbzw. Montageverfahrens sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1 und 2: perspektivisch bzw. von der Seite eine erfindungsgemäße Montagevorrichtung jeweils in einer Explosionsansicht,
- Fig. 3, 4 und 5: jeweils die Montagevorrichtung von Fig. 1 und 2 in einem zusammengesetzten, jedoch noch nicht endgültig montierten Zwischenzustand, wobei Fig. 5 ein Schnitt entlang der Linie A-A von Fig. 4 ist, und
- Fig. 6, 7 und 8: Ansichten entsprechend Fig. 3, 4 und 5 mit der Montagevorrichtung im endgültig montierten Zustand.

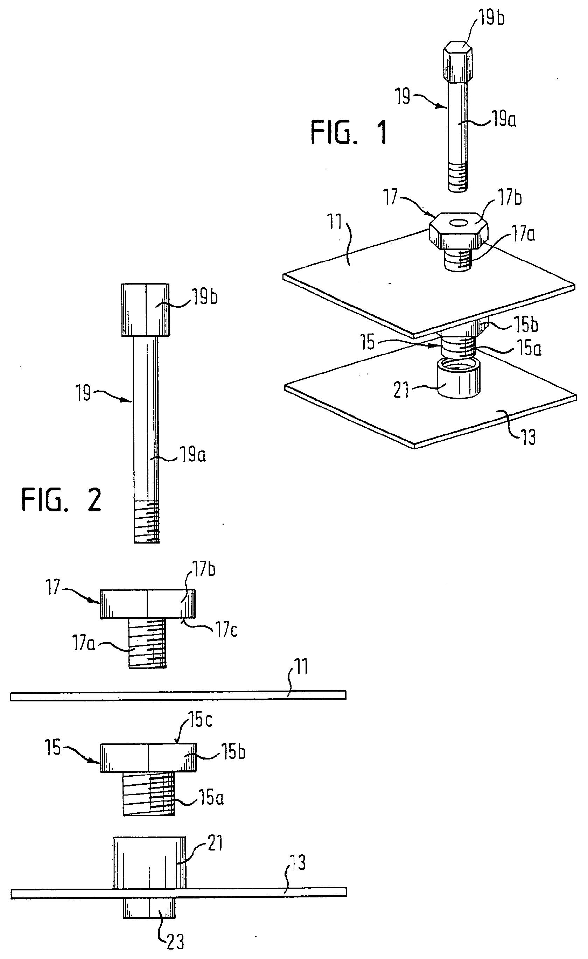

In der dargestellten Ausführungsform sind das Distanzelement 15, das Befestigungselement 17 und das Halteelement 19 jeweils in Form eines Schraubenelementes mit einem Sechskant-Kopfabschnitt 15b, 17b, 19b sowie einem zylindrischen Schaftabschnitt 15a, 17a, 19a vorgesehen. Die mit einem gewünschten Nominalabstand zu positionierenden Bauteile 11, 13 sind in den Fig. 1 - 8 lediglich beispielhaft als plattenförmige Teile dargestellt. Mit der erfindungsgemäßen Montagevorrichtung können grundsätzlich beliebig gestaltete Bauteile relativ zueinander positioniert werden. Bevorzugt handelt es sich bei dem unteren Bauteil in den Fig. 1 - 8 um einen Bereich der Karosserie eines Kraftfahrzeugs und bei dem oberen Bauteil um einen Bereich der Fahrzeuginnenausstattung, insbesondere um das Fahrzeugcockpit bzw. die Fahrzeugarmaturentafel oder eine Komponente davon.

Das beispielsweise von einem Karosserieblech gebildete zweite Bauteil 13 ist mit zwei Schraubaufnahmen 21, 23 versehen, die entweder einstückig am Bauteil 13 ausgebildet sind und durch entsprechende Materialbearbeitungs- bzw. -verformungsprozesse hergestellt und mit einem Innengewinde versehen werden, oder die von separaten Teilen wie z.B. Mutterelementen gebildet werden, die mit dem Bauteil 13 durch entsprechende Verfahren fest verbunden werden.

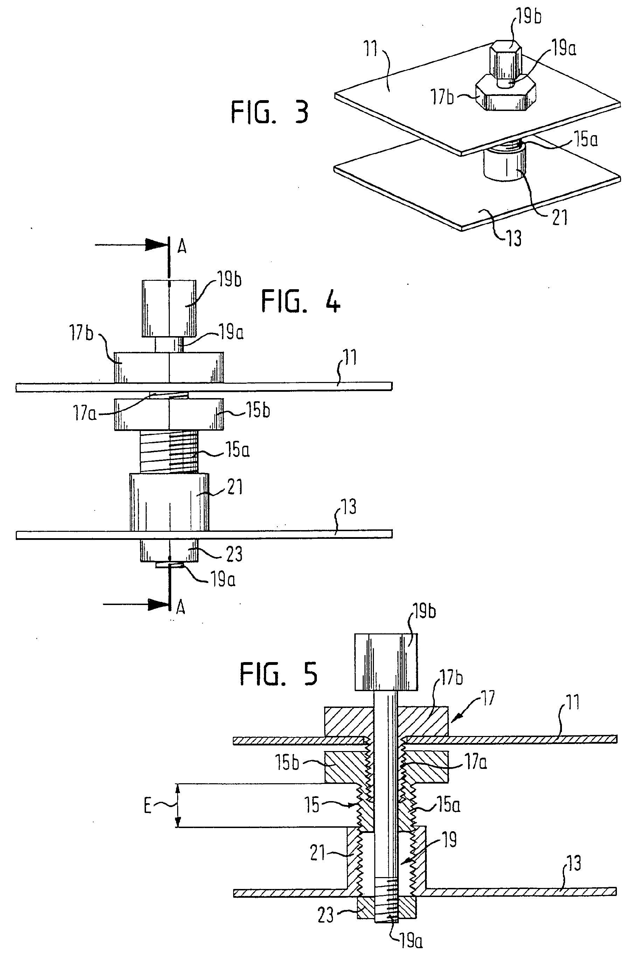

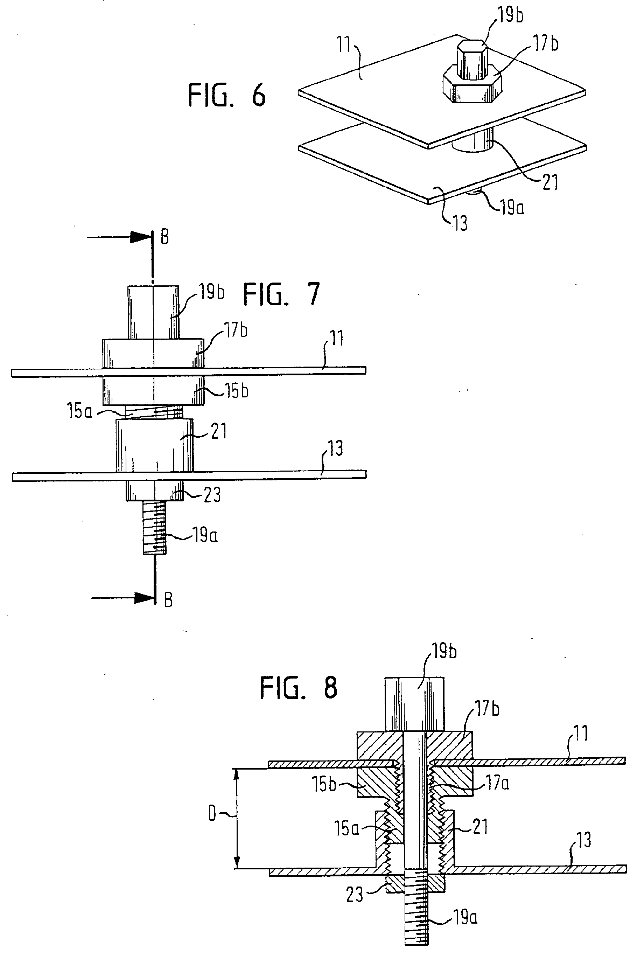

Wie insbesondere aus den Schnittdarstellungen der Fig. 5 und 8 hervorgeht, sind die Distanzschraube 15 und die Befestigungsschraube 17 jeweils mit einer zentralen Durchführung versehen. Die Durchführung der Distanzschraube 15 ist bereichsweise mit einem Innengewinde versehen, mit dem der mit einem entsprechenden Außengewinde versehene Schaftabschnitt 17a der Befestigungsschraube 17 verschraubt werden kann.

Die Durchführung der Befestigungsschraube 17 ist an den Schaftabschnitt 19a der Halteschraube 19 angepaßt, der zumindest im Bereich seines freien Endes mit einem Außengewinde versehen ist, um mit der Schraubaufnahme 23 des zweiten Bauteils 13 verschraubt werden zu können.

Über ein an ihrem Schaftabschnitt 15a ausgebildetes Außengewinde kann die Distanzschraube 15 in die Schraubaufnahme 21 eingeschraubt werden.

Die vom Schaftabschnitt 15a abgewandte Seite des Kopfabschnitts 15b dient als senkrecht zur Längsachse verlaufende Anlagefläche 15c der Distanzschraube 15 für das erste Bauteil 11.

Die in die gleiche Richtung wie ihr Schaftabschnitt 17a weisende Seite des Kopfabschnitts 17b dient als Anlagefläche 17c der Befestigungsschraube 17 für die andere Seite des ersten Bauteils 11 und verläuft ebenfalls senkrecht zur Längsachse.

Durch entsprechende Formgebung der Kopfabschnitte 15b, 17b können grundsätzlich beliebig verlaufende Anlageflächen 15c, 17c ausgebildet werden, um die Distanzschraube 15 und die Befestigungsschraube 17 an die Form des jeweiligen ersten Bauteils 11 anzupassen.

Zur Positionierung und Montage des ersten Bauteils 11 am zweiten Bauteil 13 wird zunächst der Zwischen- oder Vormontagezustand gemäß Fig. 3 - 5 hergestellt. Hierzu wird die Distanzschraube 15 so weit in die Schraubaufnahme 21 eingeschraubt, daß sie sich nicht von selbst in axialer Richtung lösen kann. Die Befestigungsschraube 17 wird mit ihrem Schaftabschnitt 17a durch eine entsprechende Öffnung im ersten Bauteil 11 hindurchgeführt und in die Distanzschraube 15 geschraubt. Das erste Bauteil 11 ist dann zwischen den beiden Kopfabschnitten 15b, 17b angeordnet. Die Tandem-Anordnung aus Distanzschraube 15 und Befestigungsschraube 17 ist durch den Schaftabschnitt 17a der Befestigungsschraube 17 unverlierbar am ersten Bauteil 11 gehalten.

Es ist auch möglich, zunächst eine lose miteinander verbundene Einheit aus Distanzschraube 15, Befestigungsschraube 17 und erstem Bauelement 11 herzustellen, bevor die Distanzschraube 15 in die Schraubaufnahme 21 des zweiten Bauteils 13 geschraubt wird.

Das Hindurchführen des Schaftabschnitts 19a der Halteschraube 19 durch die Durchführungen des Schraubentandems 15, 17 kann vor oder nach dem im folgenden beschriebenen Einstellen der Nominalposition der Distanzschraube 15 erfolgen.

Die Position der Distanzschraube 15 relativ zum zweiten Bauteil 13 kann in axialer Richtung innerhalb eines in Fig. 5 dargestellten Einstellbereiches E variiert werden, indem die Distanzschraube 15 mehr oder weniger weit in die Schraubaufnahme 21 eingeschraubt wird. Die erfindungsgemäße Einstellbarkeit der Nominalposition ist lediglich durch die axiale Länge der Schraubaufnahme 21 des zweiten Bauteils 13 bzw. des Schaftabschnitts 15a der Distanzschraube 15 begrenzt.

Auch bei gemäß Fig. 3 - 5 durch die Einheit aus Distanzschraube 15, erstem Bauteil 11 und Befestigungsschraube 17 hindurchgeführtem und mit der Schraubaufnahme 23 in Schraubeingriff stehendem Schaftabschnitt 19a der Halteschraube 19 kann die Distanzschraube 15 relativ zu den anderen Elementen verdreht werden, um die jeweils gewünschte Nominalposition einzustellen.

Bei in ihrer Nominalposition befindlicher Distanzschraube 15 wird das erste Bauteil 11 durch Festziehen der Befestigungsschraube 17 an der Distanzschraube 15 fixiert und dabei zwischen den beiden Anlageflächen 15c, 17c der Kopfabschnitte 15, 17 eingeklemmt oder eingespannt.

Das erste Bauteil 11 befindet sich nunmehr in dem gewünschten Nominalabstand D zum zweiten Bauteil 13 (vgl. Fig. 6 - 8), der durch die zuvor eingestellte Nominalposition der Distanzschraube 15 vorgegeben ist.

Durch Festziehen der Halteschraube 19 wird die Distanzschraube 15 und damit die Einheit aus Distanzschraube 15, erstem Bauteil 11 und Befestigungsschraube 17 gekontert und dadurch am zweiten Bauteil 13 festgestellt und gesichert. Eine Drehung der Distanzschraube 15 relativ zum zweiten Bauteil 13 und damit eine Änderung des Abstands zwischen den beiden Bauteilen 11, 13 ist aufgrund des Konterns mittels der Halteschraube 19 nicht möglich.

Der Nominalabstand D zwischen den beiden Bauteilen 11, 13 wird durch das insofern als Sicherungs- oder Verriegelungsorgan dienende Halteelement 19 "eingefroren".

### Bezugszeichenliste

- 11: erstes Bauteil
- 13: zweites Bauteil
- 15: Distanzelement
- 15a: Schaftabschnitt
- 15b: Kopfabschnitt
- 15c: Anlagefläche
- 17: Befestigungselement
- 17a: Schaftabschnitt
- 17b: Kopfabschnitt
- 17c: Anlagefläche
- 19: Halteelement
- 19a: Schaftabschnitt
- 19b: Kopfabschnitt
- 21: Schraubaufnahme
- 23: Schraufaufnahme

- D: Nominalabstand
- E: Einstellbereich

## Patentansprüche

1. Montagevorrichtung zum Positionieren zumindest eines ersten Bauteils (11) insbesondere einer Kraftfahrzeuginnenausstattung an wenigstens einem zweiten Bauteil (13) insbesondere einer Fahrzeugkarosserie mit einem bei der Montage einstellbaren und im montierten Zustand fixierten Nominalabstand (D) zwischen den beiden Bauteilen (11, 13), mit
- einem Distanzelement (15), das an dem zweiten Bauteil (13) in Abstandsrichtung insbesondere stufenlos verstellbar anbringbar ist,
- einem Befestigungselement (17), mit dem das erste Bauteil (13) am Distanzelement im durch die Stellung des am zweiten Bauteil (13) angebrachten Distanzelementes (15) vorgegebenen Nominalabstand (D) zum zweiten Bauteil (13) fixierbar ist, und
- einem Halteelement (19), mit dem das Distanzelement (15) bei durch das Befestigungselement (17) fixiertem ersten Bauteil (11) in seiner den Nominalabstand (D) zwischen den beiden Bauteilen (11, 13) festlegenden Stellung am zweiten Bauteil (13) feststellbar ist.

2. Montagevorrichtung nach Anspruch 1,
**dadurch gekennzeichnet,**
**daß** das Distanzelement (15) mit dem zweiten Bauteil (13) verschraubbar und insbesondere in eine am zweiten Bauteil (13) ausgebildete oder befestigte Schraubaufnahme (21) einschraubbar ist.

3. Montagevorrichtung nach Anspruch 1 oder 2,
**dadurch gekennzeichnet,**
**daß** das erste Bauteil (11) zwischen dem Distanzelement (15) und dem Befestigungselement (17) einklemmbar oder einspannbar ist.

4. Montagevorrichtung nach einem der vorhergehenden Ansprüche,
**dadurch gekennzeichnet,**
**daß** das Befestigungselement (17) mit dem Distanzelement (15) insbesondere unter Zwischenlage des ersten Bauteils (11) verschraubbar ist.

5. Montagevorrichtung nach einem der vorhergehenden Ansprüche,
**dadurch gekennzeichnet,**
**daß** das Befestigungselement (17) in das Distanzelement (15) einschraubbar ist.

6. Montagevorrichtung nach einem der vorhergehenden Ansprüche,
**dadurch gekennzeichnet,**
**daß** im montierten Zustand das Distanzelement (15) durch das Halteelement (19) gekontert ist.

7. Montagevorrichtung nach einem der vorhergehenden Ansprüche,
**dadurch gekennzeichnet,**
**daß** das Halteelement (19) mit dem zweiten Bauteil (13) verschraubbar ist.

8. Montagevorrichtung nach einem der vorhergehenden Ansprüche,
**dadurch gekennzeichnet,**
**daß** das Distanzelement (15) und das Befestigungselement (17) jeweils mit einer Durchführung für das Halteelement (19) versehen sind.

9. Montagevorrichtung nach einem der vorhergehenden Ansprüche,
**dadurch gekennzeichnet,**
**daß** im montierten Zustand das Distanzelement (15), das Befestigungselement (17) und das Halteelement (19) koaxial angeordnet sind.

10. Montagevorrichtung nach einem der vorhergehenden Ansprüche,
**dadurch gekennzeichnet,**
**daß** im montierten Zustand das Halteelement (19) durch die von dem Distanzelement (15), dem Befestigungselement (17) und dem ersten Bauteil (11) gebildete Einheit hindurch mit dem zweiten Bauteil (13) in Eingriff steht.

11. Montagevorrichtung nach einem der vorhergehenden Ansprüche,
**dadurch gekennzeichnet,**
**daß** das Distanzelement (15) als Schraubenelement ausgebildet ist und einen zumindest bereichsweise mit einem Außengewinde versehenen Schaftabschnitt (15a) aufweist.

12. Montagevorrichtung nach einem der vorhergehenden Ansprüche,
**dadurch gekennzeichnet,**
**daß** das Distanzelement (15) als Schraubenelement ausgebildet ist und eine wenigstens bereichsweise mit einem Innengewinde versehene Durchführung insbesondere in einem Schaftabschnitt (15a) aufweist.

13. Montagevorrichtung nach einem der vorhergehenden Ansprüche,
**dadurch gekennzeichnet,**
**daß** das Distanzelement (15) eine bevorzugt an einem Kopfabschnitt (15b) ausgebildete Anlagefläche (15c) für das erste Bauteil (11) aufweist, wobei bevorzugt die Anlagefläche (15c) und ein Schaftabschnitt (15a) des Distanzelementes (15) in entgegengesetzte Richtungen weisen.

14. Montagevorrichtung nach einem der vorhergehenden Ansprüche,
**dadurch gekennzeichnet,**
**daß** das Befestigungselement (17) als Schraubenelement ausgebildet ist und einen zumindest bereichsweise mit einem Außengewinde versehenen Schaftabschnitt (17a) aufweist.

15. Montagevorrichtung nach einem der vorhergehenden Ansprüche,
**dadurch gekennzeichnet,**
**daß** das Befestigungselement (17) eine Durchführung insbesondere in einem Schaftabschnitt (17a) aufweist.

16. Montagevorrichtung nach einem der vorhergehenden Ansprüche,
**dadurch gekennzeichnet,**
**daß** das Befestigungselement (17) eine bevorzugt an einem Kopfabschnitt (17b) ausgebildete Anlagefläche (17c) für das erste Bauteil (11) aufweist, wobei bevorzugt die Anlagefläche (17c) und ein Schaftabschnitt (17a) des Befestigungselementes (17) in die gleiche Richtung weisen.

17. Montagevorrichtung nach einem der vorhergehenden Ansprüche,
**dadurch gekennzeichnet,**
**daß** das Halteelement (19) als Schraubenelement ausgebildet ist und einen zumindest bereichsweise mit einem Außengewinde versehenen Schaftabschnitt (19a) aufweist.

18. Verfahren zum Positionieren zumindest eines ersten Bauteils (11) insbesondere einer Kraftfahrzeuginnenausstattung an wenigstens einem zweiten Bauteil (13) insbesondere einer Fahrzeugkarosserie, bei dem
- am zweiten Bauteil (13) ein Distanzelement (15) angebracht und durch Verstellen in Abstandsrichtung relativ zum zweiten Bauteil (13) in eine Nominalstellung gebracht wird,
- das erste Bauteil (11) mit einem Befestigungselement (17) am Distanzelement (15) insbesondere in einem durch die Stellung des Distanzelementes (15) vorgegebenen Nominalabstand (D) zum zweiten Bauteil (13) fixiert wird, und
- das Distanzelement (15) mit einem Halteelement (19) am zweiten Bauteil (13) festgestellt wird.

19. Verfahren nach Anspruch 18,
**dadurch gekennzeichnet,**
**daß** das Distanzelement (15) mit dem zweiten Bauteil (13), das Befestigungselement (17) mit dem Distanzelement (15) und/oder das Halteelement (19) mit dem zweiten Bauteil (13) verschraubt wird.

20. Verfahren nach Anspruch 18 oder 19,
**dadurch gekennzeichnet,**
**daß** das erste Bauteil (11) zwischen dem Distanzelement (15) und dem Befestigungselement (17) eingeklemmt oder eingespannt wird.

21. Verfahren nach einem der Ansprüche 18 bis 20,
**dadurch gekennzeichnet,**
**daß** das Distanzelement (15) durch das Halteelement (19) gekontert wird.

22. Verfahren nach einem der Ansprüche 18 bis 21,
**dadurch gekennzeichnet,**
**daß** eine Montagevorrichtung nach einem der Ansprüche 1 bis 17 verwendet wird.
